# EUROPÄISCHE PATENTANMELDUNG

(11) **EP 4 666 839 A1**
(43) Veröffentlichungstag der Anmeldung: **24.12.2025**
(21) Anmeldenummer: 25176404.9
(22) Anmeldetag: 14.05.2025
(51) Int. Cl.: A01F 15/08

(54) **ASSISTENZSYSTEM SOWIE VERFAHREN ZUR ANSTEUERUNG ZUMINDEST EINER LANDWIRT-SCHAFTLICHEN MASCHINENANORDNUNG**

(30) Priorität: 19.06.2024 DE 102024117250
(71) Anmelder: Usines CLAAS France S.A.S, 57140 St. Rémy / Woippy (FR)
(72) Erfinder: Fuchs, Volker, 54439 Saarburg (DE); Batancourt, Grégory, 57130 Vionville (FR); Bistritz, Philipp, 78337 Öhningen (DE); Bonhomme, Thierry, 57730 Macheren (FR); Dommange, Pierre, 722220 Saint-Mars-d Outillé (FR); Fischer, Josef, 88400 Biberach (DE); Henselmeyer, Hendrik, 49214 Bad Rothenfelde (DE); Obellianne, Steve, 57530 Courcelles-Chaussy (FR); Risse, Nicolas, 57645 Retonfey (FR); Wieckhorst, Jan Carsten, 29525 Uelzen Orsteil Hanstedt 2 (DE); Rongvaux, Laurent, 54800 Tronville (FR)
(74) Vertreter: CLAAS Gruppe

(57) **Zusammenfassung**

Die vorliegende Erfindung betrifft ein Assistenzsystem (20), welches dazu eingerichtet ist, zumindest eine landwirtschaftliche Maschinenanordnung (22) bei der Planung und Durchführung zumindest einer auf einem Feld (F) auszuführenden landwirtschaftlichen Arbeitsaufgabe (31) zur Bildung von in Schwaden (29) abgelegtem Erntegut (EG) zu unterstützen, indem das Assistenzsystem (20) zumindest einen Konfigurationsdatensatz (KD) zur Durchführung der zumindest einen landwirtschaftlichen Arbeitsaufgabe (31) durch die zumindest eine Maschinenanordnung (22) generiert, **dadurch gekennzeichnet,** dass das Assistenzsystem (20) dazu eingerichtet ist, die Generierung des zumindest einen Konfigurationsdatensatzes (KD) vorausplanend in Abhängigkeit von dem Assistenzsystem (20) zur Verarbeitung bereitgestellten Daten (D) und/oder Parametern (P) einer das Feld (F) nachfolgend bearbeitenden, an eine landwirtschaftliche Zugmaschine (1) adaptierten Ballenpresse (2), eines mit der Ballenpresse (2) durchzuführenden Ballenpressvorgangs (35) und/oder eines zu pressenden Erntegutballens (19) durchzuführen.

## Beschreibung

Die vorliegende Erfindung betrifft ein Assistenzsystem gemäß dem Oberbegriff des Anspruches 1. Weiterhin ist ein Verfahren zur Ansteuerung zumindest einer landwirtschaftlichen Maschinenanordnung auf einem Feld gemäß dem Oberbegriff des Anspruches 15 Gegenstand der vorliegenden Erfindung.

Die WO 2018/206669 A1 beschreibt ein System mit einer Steuerungsvorrichtung zur Ansteuerung eines als Ballenpresse ausgeführten landwirtschaftlichen Fahrzeugs auf einem Feld, wobei die Steuerungsvorrichtung mit der Ballenpresse verbunden ist. Die Steuerung empfängt Daten eines anderen auf dem Feld befindlichen landwirtschaftlichen Fahrzeugs. Die von dem anderen landwirtschaftlichen Fahrzeug empfangenen Daten werden durch die Steuerungsvorrichtung zur Ermittlung von Routenplandaten verwendet, die für eine von der Ballenpresse auf dem landwirtschaftlichen Feld zu fahrende Route repräsentativ sind. So ist es aus der WO 2018/206669 A1 bekannt, dass die Steuerungsvorrichtung vorhandene Daten eines auf dem Feld erzeugten Schwads verwendet, um die Route oder die Fahrgeschwindigkeit der Ballenpresse anzupassen. Zur Ansteuerung der Ballenpresse ist somit vorgesehen, diese entsprechend der das Feld vorangehend bearbeitende landwirtschaftliche Fahrzeug zur Verfügung gestellten Daten anzusteuern.

Ausgehend vom vorstehend genannten Stand der Technik liegt der Erfindung die Aufgabe zugrunde, ein Assistenzsystem sowie ein Verfahren zur Ansteuerung zumindest einer landwirtschaftlichen Maschinenanordnung bereitzustellen, welche einen zielgerichteten und effizienteren Betrieb der Ballenpresse ermöglichen.

Diese Aufgabe wird erfindungsgemäß durch ein Assistenzsystem mit den Merkmalen des Anspruches 1 sowie ein Verfahren mit den Merkmalen des nebengeordneten Anspruches 15 gelöst. Vorteilhafte Weiterbildungen sind Gegenstand der abhängigen Ansprüche.

Gemäß dem Anspruch 1 wird ein Assistenzsystem vorgeschlagen, welches dazu eingerichtet ist, zumindest eine landwirtschaftliche Maschinenanordnung bei der Planung und Durchführung zumindest einer auf einem Feld auszuführenden landwirtschaftlichen Arbeitsaufgabe zur Bildung von in Schwaden abgelegtem Erntegut zu unterstützen, indem das Assistenzsystem zumindest einen Konfigurationsdatensatz zur Durchführung der zumindest einen landwirtschaftlichen Arbeitsaufgabe durch die zumindest eine Maschinenanordnung generiert. Erfindungsgemäß ist vorgesehen, dass das Assistenzsystem dazu eingerichtet ist, die Generierung des zumindest einen Konfigurationsdatensatzes vorausplanend in Abhängigkeit von dem Assistenzsystem zur Verarbeitung bereitgestellten Daten und/oder Parametern einer das Feld nachfolgend bearbeitenden, an eine landwirtschaftliche Zugmaschine adaptierten Ballenpresse, eines mit der Ballenpresse durchzuführenden Ballenpressvorgangs und/oder eines zu pressenden Erntegutballens durchzuführen.

Wesentlich ist hierbei die Überlegung, der Planung zumindest einer auf dem Feld auszuführenden landwirtschaftlichen Arbeitsaufgabe zur Bildung von in Schwaden abgelegten Erntegutes die Anforderungen des letzten Prozessschrittes, der Herstellung von Erntegutballen, der durch eine Ballenpresse durchgeführt wird, zugrunde zu legen. Hierdurch kann der zumindest eine Konfigurationsdatensatz optimal auf die Anforderungen der Ballenpresse, des Ballenpressvorgangs und die zu erreichenden Qualitätsmaßstäbe der Erntegutballen hin angepasst werden. Das erfindungsgemäße Assistenzsystem generiert den zumindest einen Konfigurationsdatensatz für die zumindest eine Maschinenanordnung unter der Prämisse, dass dem Prozessschritt der Herstellung des Erntegutballens vorangehende Arbeitsaufgaben sich an diesem Prozessschritt orientieren, um einen an die eingesetzte Ballenpresse angepassten Schwad mit Erntegut bereitzustellen, sodass der Ballenpressvorgang optimiert und effizient ablaufen kann.

Der zumindest eine Konfigurationsdatensatz für eine Maschinenanordnung umfasst insbesondere deren Betriebsparameter sowie eine zeitliche und/oder räumliche Einsatzplanung.

Insbesondere können die der vorausplanenden Generierung des zumindest einen Konfigurationsdatensatzes vorgegebenen Daten und/oder Parameter der Ballenpresse und/oder des durchzuführenden Ballenpressvorganges eine mittels eines Antriebsaggregats und/oder Antriebsstrangs der Zugmaschine einstellbare Fahrgeschwindigkeit, ein mittels eines Lenksystems der Zugmaschine einstellbarer Lenkwinkel, eine Ausrichtung der Ballenpresse relativ zur Zugmaschine, eine Drehzahl einer Zapfwelle der Zugmaschine, ein mittels eines Hydrauliksystems der Zugmaschine bereitzustellender hydraulischer Druck, ein Reifendruck zumindest eines Bodeneingriffsmittels der Zugmaschine, ein Drehmoment und/oder eine Drehgeschwindigkeit einer Pick-up der Ballenpresse, ein Drehmoment und/oder eine Drehgeschwindigkeit eines Rotors der Ballenpresse, eine Aktivierung oder Deaktivierung von Schneidmessern der Ballenpresse zur Einstellung einer Schnittlänge des Erntegutes, eine Drehzahl und/oder Anzahl von Hüben eines Raffers der Ballenpresse, ein in einer Presskammer der Ballenpresse aufzubringender Pressdruck, eine Aktivierung oder Deaktivierung einer Bindeeinrichtung der landwirtschaftlichen Ballenpresse, eine Arbeitsbreite der Pick-up und/oder eine Ablage des mittels der Ballenpresse geformten Erntegutballens umfassen. Durch die Vorgabe der Daten und/oder Parameter der Ballenpresse und/oder des durchzuführenden Ballenpressvorganges können bei der Generierung des zumindest einen Konfigurationsdatensatzes deren Einflussgrößen berücksichtigt werden, um einen optimalen Betrieb der Ballenpresse zu erreichen.

Das Vorgegeben der Daten und/oder Parameter der Ballenpresse und/oder des durchzuführenden Ballenpressvorganges bezieht die späteren Anforderungen der Ballenpresse beim Pressen von Erntegutballen an den aufzunehmenden und zu verarbeitenden Schwad ein. So kann eine Arbeitsgeschwindigkeit der Ballenpresse optimiert werden, indem im Vorfeld die hierfür erforderlichen Voraussetzungen durch die zumindest eine Maschinenanordnung geschaffen werden.

Bevorzugt können die der vorausplanenden Generierung des zumindest einen Konfigurationsdatensatzes vorgegebenen Daten und/oder Parameter des zu pressenden Erntegutballens aus der Gruppe Ballendichte, Trockengrad des zu pressenden Erntegutes, Formstabilität, Feuchtigkeitsgehalt, Trockensubstanzgehalt, Rohfaserzusammensetzung, Rohascheanteil, Zuckergehalt, Rohproteingehalt und/oder Rohfettgehalt sein. Weitere Daten und/oder Parameter können Erntegutart, Erntegutsorte, Blattflächenindex des Ernteguts, ein stomatärer Widerstand des Ernteguts, eine Wachsschicht des Ernteguts, eine Bestandsdichte des Ernteguts sowie eine Bestandshöhe des Ernteguts und/oder eine Stoppelhöhe sein. Mittels der Vorgabe der Daten und/oder Parameter des zu pressenden Erntegutballens können bei der Generierung des zumindest einen Konfigurationsdatensatzes wesentliche Qualitätsvorgaben berücksichtig werden.

So kann, bei einer Kenntnis von geplanten Qualitätsparametern und/oder wenn die Inhaltsstoffe des Schwads, beispielsweise aus historischen Daten, oder entlang des Einzugsgebiets geplanter Ablagen von Schwaden bekannt sind, der Einsatz von Siliermittel vorab geplant werden. Dabei lassen sich Art und Menge von Siliermittel sowie dessen Bereitstellung auf dem zu bearbeitenden Feld koordinieren und an die Anforderung, welches oder welche Siliermittel für die aktuelle Silage geeignet ist bzw. sind, anpassen.

Bevorzugt können die der vorausplanenden Generierung des zumindest einen Konfigurationsdatensatzes vorgegebenen Daten und/oder Parameter zumindest eine Zielgröße und/oder eine Strategievorgabe sein. Als Strategievorgaben können beispielsweise eine Optimierungsstrategie "Ballenqualität", "Ballendichte", "Energieverbrauch der Ballenpresse", "Durchsatz der Ballenpresse", "Garnmaterial" und/oder "Lebensdauer der Ballenpresse" vorgegeben sein, wobei für jede dieser Optimierungsstrategien ein zu erreichender Zielwert definiert werden kann. Als Zielgröße kann beispielsweise die Verwendung der Erntegutballen als Futtermittel oder für den Einsatz in einer Biogasanlage vorgegeben sein.

Gemäß einer vorteilhaften Weiterbildung können die der vorausplanenden Generierung des zumindest einen Konfigurationsdatensatzes vorgegebenen Daten und/oder Parameter des mittels der Ballenpresse geformten Erntegutballens Zustand und/oder Energiegehalt des im Schwad abgelegten Ernteguts und/oder Dimension, Masse und Lage des Schwads umfassen. Mit Dimension des Schwads sind insbesondere dessen Form respektive Querschnittskontur, eine seitliche Verteilung von Erntegut im Schwad, die Breite und die Höhe des Schwads bezeichnet. Unter dem Begriff Lage des Schwads ist unter anderem der Verlauf, insbesondere die Geradlinigkeit des Verlaufs, in Ablagerichtung und dessen lateraler Abstand zu einem benachbarten Schwad zu verstehen.

Insbesondere kann das Assistenzsystem dazu eingerichtet sein, der Generierung des zumindest einen Konfigurationsdatensatzes historische und/oder prognostizierte Umweltparameter zugrunde zu legen, die in einer Datenquelle abrufbar hinterlegt und/oder hinterlegbar sind.

Bevorzugt können die Umweltparameter zumindest einen Parameter aus der Gruppe Umgebungstemperatur, Luftfeuchtigkeit, Witterungsverhältnisse, Intensität und Dauer der Sonneneinstrahlung, Verdunstung von Feuchtigkeit aus dem Boden Bodenart, Bodenfeuchte und/oder Niederschlagsmengen umfassen.

Gemäß einer vorteilhaften Weiterbildung kann das Assistenzsystem dazu eingerichtet sein, von der zumindest einen Maschinenanordnung während der Durchführung der zumindest einen auf dem Feld auszuführenden landwirtschaftlichen Arbeitsaufgabe und/oder von einer externen, von der Maschinenanordnung unabhängigen Sensoreinrichtung sensorisch erfasste, georeferenzierte Daten des Erntegutes, des Feldes sowie der Umgebung und georeferenzierte Einstelldaten der Maschinenanordnung, insbesondere in Echtzeit, zu empfangen und auszuwerten.

Weiter bevorzugt kann das Assistenzsystem dazu eingerichtet sein, von zumindest einer externen Datenquelle bereitgestellte georeferenzierte historische Daten des zu bearbeitenden Feldes zu empfangen und auszuwerten.

Insbesondere kann das Assistenzsystem dazu eingerichtet sein, eine Feldkarte mit für erzeugte Schwaden spezifischen Schwaddaten mittels der empfangenen georeferenzierten Daten zu erstellen. Die spezifischen Schwaddaten können zur Ansteuerung der landwirtschaftlichen Zugmaschine und der an diese adaptierte Ballenpresse übertragen werden.

Bevorzugt kann die Feldkarte Ertragsdaten enthalten, welche Rückschluss auf einen erforderlichen Einsatz von Düngemittel auf dem Feld ermöglicht, um den Anteil an Nährstoffen, die mit dem Abernten des Feldes entnommen wurden, zu kompensieren.

Insbesondere kann eine Verbesserung der Ertragskartierung dadurch erreicht werden, dass eine jeweilige an der Ballenpresse eingestellte Schnittlänge herangezogen wird, um den Ertrag auf die Schnittlänge bezogen in der Feldkarte als Ertragsdaten zu kartieren.

Bevorzugt kann die zumindest eine dem Ballenpressvorgang vorgelagerte Arbeitsaufgabe eine Arbeitsaufgabe "Mähen", eine Arbeitsaufgabe "Wenden" und/oder eine Arbeitsaufgabe "Schwaden" sein, wobei eine bei der Arbeitsaufgabe "Mähen" verwendete Maschinenanordnung ein landwirtschaftliches Gespann aus einem Zugfahrzeug und mindestens einem daran adaptierten Mähwerk, eine bei der Arbeitsaufgabe "Wenden" verwendete Maschinenanordnung ein landwirtschaftliches Gespann aus einem Zugfahrzeug und einem daran adaptierten Wender und eine bei der Arbeitsaufgabe "Schwaden" verwendete Maschinenanordnung ein landwirtschaftliches Gespann aus einem Zugfahrzeug und mindestens einem daran adaptierten Schwader ist. Die Durchführung der vorstehend aufgelisteten Arbeitsaufgaben kann dabei durch ein Zugfahrzeug mit wechselnden Anbaugeräten, d.h. Mähwerk, Wender, Schwader, durchgeführt werden.

So kann sich der von dem generierten Konfigurationsdatensatz umfasste Betriebsparameter "Arbeitsbreite" der für die Arbeitsaufgabe "Schwaden" verwendeten Maschinenanordnung an einem vorgegeben Wert für die von der Ballenpresse aufzunehmende Frischmasse je Längeneinheit des Schwads orientieren.

Die von dem zumindest einen Konfigurationsdatensatz für eine Maschinenanordnung umfasste zeitliche und/oder räumliche Einsatzplanung kann beispielsweise die Verwendung eines Mergers oder Pick-up-Schwaders vorsehen, um die Anforderungen an die Lage des Schwads und den Frischmassegehalt im Schwad zu erreichen.

Gemäß einer Weiterbildung kann das Assistenzsystem dazu eingerichtet sein, den zumindest einen generierten Konfigurationsdatensatz automatisch an die die jeweilige Arbeitsaufgabe ausführende Maschinenanordnung zu übertragen und die Einstellung der jeweiligen Maschinenanordnung entsprechend des Konfigurationsdatensatzes automatisch zu initiieren und/oder die vorzunehmenden Einstellungen mittels einer der Maschinenanordnung zugeordneten Anzeigevorrichtung, insbesondere auswählbar, zu visualisieren. Letzteres vereinfacht es dem Bediener der die jeweilige Arbeitsaufgabe ausführenden Maschinenanordnung, die vorzunehmenden Einstellungen manuell umzusetzen.

Insbesondere kann das Assistenzsystem dazu eingerichtet sein, die Parameter der Ballenpresse in Abhängigkeit vom zu erwartenden Schwad anzupassen. Hierbei kann eine durch die Ballenpresse abzufahrende Fahrspur basierend auf der Schwadgeometrie sowie den Abmessungen von Zugfahrzeug und Anbaugerät der Maschinenanordnung durch das Assistenzsystem bestimmt werden. Dabei kann eine Berücksichtigung der Eigenschaften der Querverteilung im Schwad erfolgen. Ein weiterer Aspekt kann die Vorgabe einer bezüglich der Schwadgeometrie asymmetrischen Fahrspur durch das Assistenzsystem sein, entlang der die Ballenpresse bewegt wird, um den Schwad aufzunehmen.

Ein weiterer Aspekt ist die Anpassung der Betriebsparameter der Ballenpresse auf Grundlage von in einer Schwadlagekarte des Feldes aufgezeichneten historischen Silageparametern.

Bevorzugt kann das Assistenzsystem in ein externes Datenverarbeitungssystem, insbesondere ein Farmmanagementsystem, oder in eine Steuerungsvorrichtung der Maschinenanordnung und/oder eine Steuerungsvorrichtung der Ballenpresse implementiert sein. Bei einer Implementierung des Assistenzsystems in die Steuerungsvorrichtung der Maschinenanordnung und/oder der Ballenpresse kann vorgesehen sein, dass das Assistenzsystem dazu eingerichtet sein kann, die Durchführung der zumindest einen auf dem Feld auszuführenden landwirtschaftlichen Arbeitsaufgabe zu unterstützen. Insbesondere können bei einer Implementierung des Assistenzsystems in die Steuerungsvorrichtung der Maschinenanordnung und/oder der Ballenpresse die Assistenzsysteme untereinander durch geeignete Kommunikationsmittel vernetzt sein, sodass diese untereinander Daten austauschen können.

Die eingangs gestellte Aufgabe wird weiterhin durch ein Verfahren zur Ansteuerung zumindest einer landwirtschaftlichen Arbeitsmaschine auf einem Feld mit den Merkmalen des nebengeordneten Anspruches 15 gelöst.

Gemäß dem Anspruch 15 wird ein Verfahren zur Ansteuerung zumindest einer landwirtschaftlichen Maschinenanordnung auf einem Feld vorgeschlagen, wobei die zumindest eine landwirtschaftlichen Maschinenanordnung bei der Planung und Durchführung zumindest einer auf dem Feld auszuführenden landwirtschaftlichen Arbeitsaufgabe zur Bildung von in Schwaden abgelegtem Erntegut durch ein nach einem der vorangehenden Ansprüche ausgeführtes Assistenzsystem unterstützt wird, indem durch das Assistenzsystem zumindest ein Konfigurationsdatensatz zur Durchführung der zumindest einen landwirtschaftlichen Arbeitsaufgabe durch die zumindest eine Maschinenanordnung generiert wird, wobei die Generierung des zumindest einen Konfigurationsdatensatzes vorausplanend in Abhängigkeit von dem Assistenzsystem bereitgestellten Daten und/oder Parametern einer das Feld nachfolgend bearbeitenden, an eine landwirtschaftliche Zugmaschine adaptierten Ballenpresse, eines mit der Ballenpresse durchzuführenden Ballenpressvorgangs und/oder eines zu pressenden Erntegutballens durchgeführt wird. Auf die Ausführungen zum erfindungsmäßen Assistenzsystem darf verwiesen werden.

Die vorliegende Erfindung wird nachstehend anhand eines in den Zeichnungen dargestellten Ausführungsbeispieles näher erläutert.

Es zeigen:
- Fig. 1: schematisch und exemplarisch eine Darstellung einer landwirtschaftlichen Zugmaschine und einer daran adaptierten Ballenpresse; und
- Fig. 2: eine schematische und exemplarische Darstellung eines erfindungsgemäßen Assistenzsystems für die Zugmaschine und die Ballenpresse nach Fig. 1 im Kontext eines Ballenpressvorgangs.

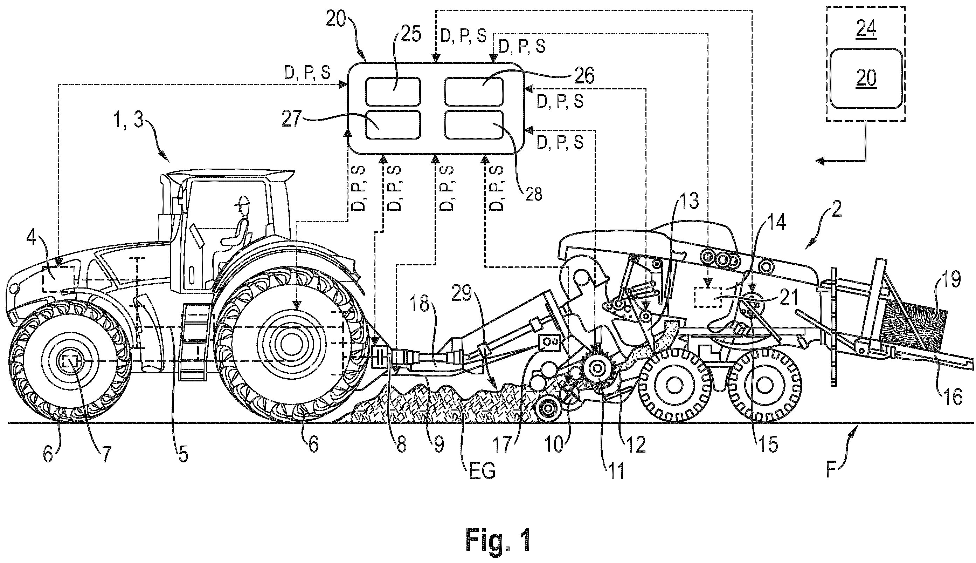

Fig. 1 zeigt schematisch und exemplarisch eine Darstellung einer landwirtschaftlichen Zugmaschine 1 und einer an diese adaptierte Ballenpresse 2. Die Ballenpresse 2 ist beispielhaft als Quaderballenpresse dargestellt wobei gleichermaßen eine Rundballenpresse an die Zugmaschine 1, hier und vorzugsweise ein Traktor 3, adaptiert sein könnte.

Sowohl die Zugmaschine 1 als auch die an die Zugmaschine 1 adaptierte Ballenpresse 2 umfassen jeweils verschiedene Arbeitsaggregate, für welche zur Durchführung eines Ballenpressvorgangs 35 Daten D und Parameter P zu deren Einstellung und Betrieb bereitgestellt werden müssen. Arbeitsaggregate der Zugmaschine 1 sind unter anderem ein Antriebsaggregat 4, das als Verbrennungsmotor, als hybrides Antriebsaggregat oder aber als elektromotorisches Antriebsaggregat ausgestaltet sein kann, ein Antriebsstrang 5 mit verschiedenen Getriebebaugruppen, Kupplungen und Wellen, Bodeneingriffsmittel 6, hier in Gestalt von Reifen dargestellt, die allerdings auch als Raupenlaufwerke ausgebildet sein können, ein Lenksystem 7 zum Lenken der Zugmaschine 1, eine Zapfwelle 8 zur Übertragung von Antriebsleistung an die Ballenpresse 2 und/oder ein Hydrauliksystem 9 der Zugmaschine 1.

Arbeitsaggregate der Ballenpresse 2 sind insbesondere eine Pick-up 10, ein Rotor 11, Schneidmesser 12, ein Raffer 13, eine Presskammer 14 mit einem Pressmittel, eine Bindeeinrichtung 15 respektive Knotereinrichtung, eine - nicht dargestellte - Heckklappe, eine Ballenablageeinrichtung 16, ein Hydrauliksystem 17 und/oder eine Deichsel 18. Mittels der Pick-up 10 wird in Form eines Schwads 29 abgelegtes Erntegut EG vom Boden eines zu bearbeitenden Feldes F aufgenommen. Arbeitsaggregate einer als Rundballenpresse ausgeführten Ballenpresse 2 unterscheiden sich prinzipbedingt zumindest teilweise von der Quaderballenpresse.

Der Ballenpresse 2 ist im dargestellten Ausführungsbespiel ein Assistenzsystem 20 zugeordnet. Das Assistenzsystem 20 kann in eine Steuerungsvorrichtung 21 der Ballenpresse 2 implementiert sein. Mittels des Assistenzsystems 20 sind die Arbeitsaggregate der Zugmaschine 1 und der Ballenpresse 2 ansteuerbar. Das Assistenzsystem 20 kann alternativ räumlich getrennt von der Steuerungsvorrichtung 21 der Ballenpresse 2 implementiert sein, beispielsweise in eine Steuerungsvorrichtung 23 einer Maschinenanordnung 22 und/oder in ein Farmmanagementsystem 24.

Das Assistenzsystem 20 umfasst eine Recheneinheit 25, eine Speichereinheit 26, eine Anzeigeeinrichtung 27 sowie eine Ein- und Ausgabeeinheit 28. Die Anzeigeeinrichtung 27 sowie die Ein- und Ausgabeeinheit 28 können wahlweise Bestandteil des Assistenzsystems 20 sein oder von diesem unabhängig ausgeführt sein, beispielsweise in Gestalt eines separaten Terminals oder als Bestandteil eines mobilen Endgeräts. Die Anzeigeeinrichtung 27 und die Ein- und Ausgabeeinheit 28 sind zumindest mit dem Assistenzsystem 20 zur Übertragung von Daten verbunden, wobei auch hier die Übertragung wahlweise drahtlos oder kabelgebunden erfolgen kann. Die Anzeigeeinrichtung 27 und die Ein- und Ausgabeeinheit 28 können bevorzugt als eine Einheit ausgeführt sein.

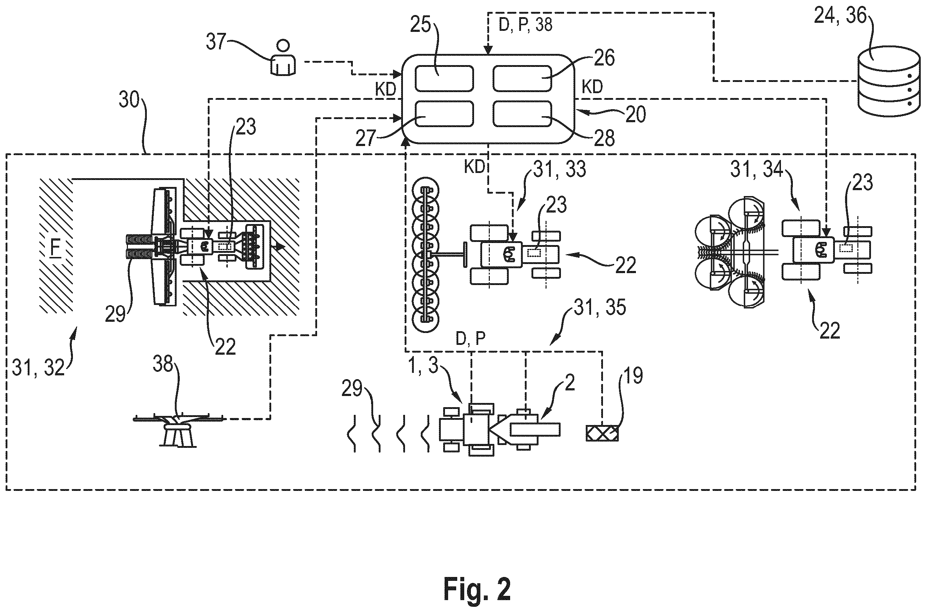

In Fig. 2 ist eine schematisch und exemplarische Darstellung eines Futterernteprozesses 30 gezeigt. Der dargestellte Futterernteprozess 30 umfasst eine Vielzahl an verschiedenen landwirtschaftlichen Arbeitsaufgaben 31. Im Einzelnen sind in Fig. 2 als Arbeitsaufgaben 31 des Futterernteprozesses 30 in chronologischer Abfolge Mähen 32, Wenden oder Zetten 33, Schwaden 34 und der Ballenpressvorgang 35 abgebildet. Weitere Prozessschritte, die in Fig. 2 nicht explizit abgebildet sind, wie Aufbereiten, Anwelken, Trocknen und Rechen von Erntegut EG, sind weiterhin mögliche Arbeitsaufgaben 31 des Futterernteprozesses 30, die dem Ballenpressvorgang 35 vorangehen.

Die Durchführung der Arbeitsaufgaben 31 Mähen 32, Wenden 33, Schwaden 34 sind der Durchführung des Ballenpressvorganges 35 vorgelagert. Bei der Arbeitsaufgabe 31 Mähen 32 wird eine Maschinenanordnung 22 verwendet, die ein landwirtschaftliches Gespann aus einem Zugfahrzeug und mindestens einem daran adaptierten Mähwerk umfasst, eine bei der Arbeitsaufgabe 31 Wenden 33 verwendete Maschinenanordnung umfasst 22 ein landwirtschaftliches Gespann aus einem Zugfahrzeug und einen daran adaptierten Wender und eine bei der Arbeitsaufgabe 31 Schwaden 34 verwendete Maschinenanordnung 22 weist ein landwirtschaftliches Gespann aus einem Zugfahrzeug und mindestens einem daran adaptierten Schwader auf.

In dem in FIG. 2 schematisch dargestellten Futterernteprozess 30 wird die Arbeitsaufgabe Mähen 32 beispielsweise durch ein Zugfahrzeug mit Front- und Seitenmähwerken realisiert, wobei das Erntegut EG in einem einzigen Schwad 29 abgelegt wird. Das dreiteilige Mähwerk kann auch nur als ein- oder zweiteiliges Mähwerk ausgeführt sein und mehrere Schwaden 29 bilden. Zudem kann das Erntegut EG bei der Durchführung der Arbeitsaufgabe 31 Mähen 32 auch in Breitablage auf dem zu bearbeitenden Feld F abgelegt werden.

Die Arbeitsaufgabe 31 Wenden 33 ist der Arbeitsaufgabe 31 Mähen 32 nachgeordnet und geht der der Arbeitsaufgabe 31 Ballenpressvorgang 35 voraus, wobei in diesem Fall beim Mähen 32 das Erntegut EG in Breitablage abgelegt wird. Die Arbeitsaufgabe 31 Wenden 33 oder Zetten wird in Abhängigkeit von der Feuchte des in Breitablage abgelegten Erntegutes EG ein oder mehrmals durchgeführt.

Wurde das Erntegut EG in Breitablage auf dem zu bearbeitenden Feld F abgelegt, umfasst Futterernteprozess 30 die nachfolgende Arbeitsaufgabe 31 des Schwadens 34.

Die Durchführung der Arbeitsaufgaben 31 durch die zumindest eine Maschineanordnung 22 erfordert die Einstellung von Betriebsparametern der Arbeitsaggregate der jeweiligen Maschineanordnung 22, die entsprechend ihrer Arbeitsaufgabe 31 und den äußeren Bedingungen variieren.

Das Assistenzsystem 20 ist dazu eingerichtet, zumindest eine landwirtschaftliche Maschinenanordnung 22 bei der Planung und Durchführung der zumindest einen auf dem Feld F auszuführenden landwirtschaftlichen Arbeitsaufgabe 31 zur Bildung von in Schwaden 29 abgelegten Erntegutes EG zu unterstützen. Hierzu generiert und übermittelt das Assistenzsystem 20 zumindest einen Konfigurationsdatensatz KD, der die notwendigen Betriebsparameter zur Durchführung der zumindest einen landwirtschaftlichen Arbeitsaufgabe 31 durch die zumindest eine Maschinenanordnung 22 umfasst.

Die Qualität des Schwads 29 oder der Schwaden 29, die durch die Maschinenanordnungen 22, welche die Arbeitsaufgabe 31 Mähen 32, Wenden 33 und/oder Schwaden 34 durchführen, im Ergebnis erzeugt werden, bestimmt neben den Ernteguteigenschaften sowie Umgebungsbedingungen, die Qualität, des durch die Ballenpresse 2 erzeugten Erntegutballens 19.

Der richtige Zustand des im Schwad 29 abgelegten Ernteguts EG sowie die Dimension und Ablageposition des Schwads 29 auf dem Feld F sind wesentlich, zum einen für einen zielgerichteten und effizienten Betrieb der Ballenpresse 2 und zum anderen auch im Hinblick auf die erreichbare Qualität des gebildeten Erntegutballens 19.

Der Begriff Dimension des Schwads 29 beschreibt insbesondere die Form respektive die Querschnittskontur des Schwads 29, eine seitliche Verteilung von Erntegut EG im Schwad 29 sowie die Breite und die Höhe des Schwads 29. Die seitliche Verteilung des Erntegutes EG im Schwad 29 hat einen maßgeblichen Einfluss auf die Gleichmäßigkeit der Erntegutaufnahme durch die Pick-up 10. Dies wirkt sich auch auf die nachfolgenden Arbeitsschritte innerhalb der Ballenpresse 2 aus. Unter dem Begriff Lage des Schwads 29 ist unter anderem der Verlauf, insbesondere die Geradlinigkeit des Verlaufs, in Ablagerichtung und dessen lateraler Abstand zu einem benachbarten Schwad 29 zu verstehen.

Der richtige Zustand eines Schwads 29, im Wesentlichen seine inhaltliche Zusammensetzung, wird durch Daten aus der Gruppe Trockengrad des zu pressenden Erntegutes EG, Feuchtigkeitsgehalt, Trockensubstanzgehalt, Rohfaserzusammensetzung, Rohascheanteil, Zuckergehalt, Rohproteingehalt und/oder Rohfettgehalt bestimmt.

Um die Durchführung des Ballenpressvorgangs 35 zu optimieren und den Betrieb der Ballenpresse 2 effizient zu gestalten, ist vorgesehen, dass das Assistenzsystem 20 dazu eingerichtet ist, die Generierung des zumindest einen Konfigurationsdatensatzes KD vorausplanend in Abhängigkeit von dem Assistenzsystem 20 zur Verarbeitung bereitgestellten Daten D und/oder Parametern P der das Feld F nachfolgend bearbeitenden Ballenpresse 2, des mit der Ballenpresse 2 durchzuführenden Ballenpressvorgangs 35 und/oder des zu pressenden Erntegutballens 19 durchzuführen.

Die Bereitstellung der Daten D und/oder Parametern P zumindest der Ballenpresse 2, bevorzugt auch der die Ballenpresse 2 ziehenden und antreibenden Zugmaschine 1, und/oder des mit der Ballenpresse 2 durchzuführenden Ballenpressvorgangs 35 und/oder des zu pressenden Erntegutballens 19 steht somit am Beginn des zu planenden und durchzuführenden Futterernteprozesses 30. Die Bereitstellung der Daten D und/oder Parameter P kann durch Datenübertragung von der Zugmaschine 1 und der Ballenpresse 2 an das Assistenzsystem 20 erfolgen.

Alternativ oder zusätzlich können die Daten D und/oder Parameter P der Zugmaschine 1 und der Ballenpresse 2 durch das externe Farmmanagementsystem 24 an das Assistenzsystem 20 übermittelt werden, wenn das Farmmanagementsystem 24 unter anderem zur Logistikplanung verwendet wird. Daten D und/oder Parameter P des mit der Ballenpresse 2 durchzuführenden Ballenpressvorgangs 35 und/oder des zu pressenden Erntegutballens 19 werden in analoger Weise am Beginn des zu planenden und durchzuführenden Futterernteprozesses 30 an das Assistenzsystem 20 übermittelt.

Daten D und/oder Parameter P der Zugmaschine 1 und/oder der Ballenpresse 2, die für die Durchführung des Ballenpressvorgangs 35 dem Assistenzsystem 20 bereitgestellt und durch von dem Assistenzsystem 20 generierte Steuersignale S eingestellt werden können, sind vorzugsweise eine Fahrgeschwindigkeit der Zugmaschine 1, die beispielsweise mittels des Antriebsaggregats 4 der Zugmaschine 1 vorgegeben werden kann, ein Lenkwinkel der Zugmaschine 1, der beispielsweise mittels des Lenksystems 7 eingestellt werden kann, eine Ausrichtung der Ballenpresse 2 relativ zu der Zugmaschine 1, die beispielsweise mittels der Deichsel 18 eingestellt werden kann, eine Drehzahl der Zapfwelle 8 der Zugmaschine 1, ein von der Zugmaschine 1 mittels des Hydrauliksystems 9 bereitstellbarer hydraulischer Druck, ein Reifendruck zumindest eines Bodeneingriffsmittels 6, ein Drehmoment und/oder eine Drehgeschwindigkeit der Pick-up 10 der Ballenpresse 2, ein Drehmoment und/oder eine Drehgeschwindigkeit des Rotors 11, ein Zeitpunkt zur Aktivierung oder Deaktivierung der Schneidmesser 12, eine Drehzahl und/oder Anzahl von Hüben des Raffers 13, ein in der Presskammer 14 aufgebrachter Pressdruck, ein Zeitpunkt zur Aktivierung oder Deaktivierung der Knotereinrichtung 15 und/oder ein Zeitpunkt zur Ablage eines gepressten Erntegutballens 19. Ebenso zählt die Aufnahmebreite der Pick-up 10 zu den Daten D und/oder Parametern P der Ballenpresse 2, die für die vorausgehende Planung durch das Assistenzsystem 20 relevant sind.

Die der vorausplanenden Generierung des zumindest einen Konfigurationsdatensatzes KD vorgegebenen Daten D und/oder Parameter P des zu pressenden Erntegutballens 19 sind aus der Gruppe Ballendichte, Trockengrad des zu pressenden Erntegutes, Formstabilität, Feuchtigkeitsgehalt, Trockensubstanzgehalt, Rohfaserzusammensetzung, Rohascheanteil, Zuckergehalt, Rohproteingehalt und/oder Rohfettgehalt. Weitere Daten D und/oder Parameter P können Erntegutart, Erntegutsorte, Blattflächenindex des Ernteguts EG, ein stomatärer Widerstand des Ernteguts EG, eine Wachsschicht des Ernteguts EG, eine Bestandsdichte des Ernteguts EG sowie eine Bestandshöhe des Ernteguts EG und/oder eine Stoppelhöhe sein.

Dabei kann es sich um vom Bediener 37 des Assistenzsystems 20 mittels der Ein- und Ausgabeeinheit 28 vorzugebende Zielvorgaben, tagesaktuelle Daten, die von zumindest einer externen Datenquelle 36 bereitgestellt werden, und/oder historische Daten des Feldes F handeln. Die historischen Daten des Feldes F können insbesondere durch das Farmmanagementsystem 24 als einer weiteren externen Datenquelle 36 bereitgestellt werden. Alternativ oder zusätzlich kann die externe Datenquelle 36 ein Hofrechner sein.

Die der vorausplanenden Generierung des zumindest einen Konfigurationsdatensatzes KD dem Assistenzsystem 20 vorgegebenen Daten D und/oder Parameter P können zudem zumindest eine Zielgröße und/oder eine Strategievorgabe sein.

Eine derartige Strategievorgabe kann beispielsweise von dem Bediener 37 über die Ein- und Ausgabeeinheit 28 vorgegeben oder aus einer bestehenden Auswahl ausgewählt werden. Sofern eine solche Strategievorgabe vorgegeben wird, berücksichtigt das Assistenzsystem 20 diese Strategievorgabe als Randbedingung während der Generierung des zumindest einen Konfigurationsdatensatzes KD für die zumindest eine Maschinenanordnung 22, welche zumindest eine der Arbeitsaufgaben 31 vor dem Ballenpressvorgang 35 durchführt.

Der erhaltene Konfigurationsdatensatzes KD für die zumindest eine Maschinenanordnung 22 basiert demnach auf den Daten D und/oder Parametern P der Zugmaschine 1 und/oder der Ballenpresse 2 und/oder des mit der Ballenpresse 2 durchzuführenden Ballenpressvorgangs 35 und/oder des zu pressenden Erntegutballens 19 und ist im Hinblick auf die vorgegebene Strategievorgabe angepasst.

Mögliche einstellbare oder auswählbare Strategievorgaben sind beispielsweise die Strategievorgaben "Ballenqualität", "Ballendichte", "Energieverbrauch der Ballenpresse", "Durchsatz der Ballenpresse", "Garnmaterial" und/oder "Lebensdauer der Ballenpresse", wobei für jede dieser Strategievorgaben ein zu erreichender Zielwert definiert werden kann. Für die Strategievorgabe "Ballendichte" kann beispielsweise der Zielwert "Gewicht Erntegut/Volumen Ballen", für die Strategievorgabe "Ballenqualität" beispielsweise die Zielwerte "Gewicht Erntegut/Volumen Ballen" und "Feuchtigkeit Erntegut pro Ballen", für die Strategievorgabe "Energieverbrauch der Ballenpresse" beispielsweise der Zielwert "Menge Kraftstoff/Zeiteinheit", für die Strategievorgabe "Durchsatz der Ballenpresse" beispielsweise der Zielwert "Gewicht oder Volumen Erntegut/Zeiteinheit", für die Strategievorgabe "Garnmaterial" beispielsweise der Zielwert "Dicke oder Festigkeit des Garns", und/oder für die Strategievorgabe "Lebensdauer der Ballenpresse" beispielsweise der Zielwert "Anzahl Arbeitsstunden" definiert bzw. vorgegeben werden.

Es ist auch denkbar, mehrere Strategievorgaben zu definieren bzw. vorzugeben, die dann von dem Assistenzsystem 20 berücksichtigt werden, derart, dass der ermittelte Konfigurationsdatensatz KD für die zumindest eine Maschinenanordnung 22 im Hinblick auf die vorgegebenen Strategievorgaben bzw. die definierten Zielwerte der Strategievorgaben harmonisiert ist. Auch kann bei der Definition bzw. Vorgabe mehrerer Strategievorgaben eine Gewichtung derselben vorgenommen werden, die dann ebenfalls vom Assistenzsystem 20 bei der Ermittlung des Konfigurationsdatensatzes KD für die zumindest eine Maschinenanordnung 22 berücksichtigt wird.

Die der vorausplanenden Generierung des zumindest einen Konfigurationsdatensatzes KD vorgegebenen Daten D und/oder Parameter P des mittels der Ballenpresse 2 geformten Erntegutballens 19 umfassen Zustand und/oder Energiegehalt des im Schwad 29 abgelegten Erntegutes EG und/oder die Dimension, Masse und Lage des Schwads 29.

Weiterhin ist das Assistenzsystem 20 dazu eingerichtet, der Generierung des zumindest einen Konfigurationsdatensatzes KD historische und/oder prognostizierte Umweltparameter 39 zugrunde zu legen, die in der externen Datenquelle 36 abrufbar hinterlegt und/oder hinterlegbar sind. Bevorzugt können die Umweltparameter 39 zumindest einen Parameter aus der Gruppe Umgebungstemperatur, Luftfeuchtigkeit, Witterungsverhältnisse, Bewölkungsgrad, Intensität und Dauer der Sonneneinstrahlung, Verdunstung von Feuchtigkeit aus dem Boden, Bodenart, Bodenfeuchte und/oder Niederschlagsmengen umfassen.

Das Assistenzsystem 20 ist dazu eingerichtet ist, von der zumindest einen Maschinenanordnung 22 während der Durchführung der zumindest einen auf dem Feld F auszuführenden landwirtschaftlichen Arbeitsaufgabe 31, die dem Ballenpressvorgang 35 vorausgeht, von der Maschinenanordnung 22 und/oder von einer externen, von der Maschinenanordnung 22 unabhängigen Sensoreinrichtung, beispielsweise einer Drohne, sensorisch erfasste, georeferenzierte Daten 38 des Erntegutes EG, des Feldes F sowie der Umgebung und georeferenzierte Einstelldaten der Maschinenanordnung 22, insbesondere in Echtzeit, zu empfangen und auszuwerten. Georeferenzierte Daten 38 des Feldes F können agronomische Daten, wie Bodendaten, Bestandsdaten, Ertragsdaten und/oder Flächendaten, umfassen.

Das maschinenferne Sensorsystem, beispielsweise die Drohne, kann mit zumindest einer Sensoreinrichtung ausgeführt sein, um des Erntegutes EG, des Feldes F sowie der Umgebung georeferenziert zu erfassen und diese an das Assistenzsystem 20 zu übermitteln. Die zumindest eine Sensoreinrichtung des maschinenfernen Sensorsystems kann zumindest einen optischen Sensor aufweisen. Zur georeferenzierten Erfassung weist das maschinenferne Sensorsystem einen Positionsortungssensor auf.

Insbesondere georeferenzierte Daten 38 des Erntegutes EG, des Feldes F sowie der Umgebung und georeferenzierte Einstelldaten der Maschinenanordnung 22, die während der Durchführung der jeweiligen Arbeitsaufgabe generiert werden, kann das das Assistenzsystem 20 dazu verwenden, mittels dieser empfangenen georeferenzierten Daten eine Feldkarte mit für erzeugte Schwaden 29 spezifischen Schwaddaten zu erstellen.

Das Assistenzsystem 20 ist dazu eingerichtet, den zumindest einen generierten Konfigurationsdatensatz KD automatisch an die die jeweilige Arbeitsaufgabe 31 ausführende Maschinenanordnung 22 zu übertragen und die Einstellung der jeweiligen Maschinenanordnung 22 entsprechend des übermittelten Konfigurationsdatensatzes KD automatisch zu initiieren. Alternativ oder zusätzlich können die vorzunehmenden Einstellungen mittels einer der Maschinenanordnung 22 zugeordneten Anzeigevorrichtung, insbesondere auswählbar, visualisiert werden. Ein Bediener der Maschinenanordnung 22 erhält somit die Möglichkeit, die in dem Konfigurationsdatensatz KD enthaltenen Betriebsparameter selbstbestimmt umzusetzen.

Insbesondere kann das Assistenzsystem 20 dazu eingerichtet sein, die Daten D und Parameter P der Ballenpresse 2 in Abhängigkeit vom zu erwartenden Schwad 29 anzupassen. Zu den Daten D, mit denen die Zugmaschine 1 und die Ballenpresse 2 angesteuert werden, gehören auch Daten einer Routenplanung. Hierbei kann eine durch die Zugmaschine 1 und die Ballenpresse 2 abzufahrende Fahrspur als anzupassende Daten D basierend auf der Schwadgeometrie sowie den Abmessungen von Zugfahrzeug und Anbaugerät der Maschinenanordnung 22 durch das Assistenzsystem 20 bestimmt werden. Dabei kann eine Berücksichtigung der Eigenschaften der Querverteilung im Schwad 29 erfolgen. Ein weiterer Aspekt kann die Vorgabe einer bezüglich der Schwadgeometrie asymmetrischen Fahrspur durch das Assistenzsystem 20 sein, entlang der die Ballenpresse 2 durch die die Zugmaschine 1 bewegt wird, um den Schwad 29 aufzunehmen.

### Bezugszeichenliste

| | | | |
|---|---|---|---|
| 1 | Zugmaschine | 34 | Schwaden |
| 2 | Ballenpresse | 35 | Ballenpressvorgang |
| 3 | Traktor | 36 | Datenquelle |
| 4 | Antriebsaggregat | 37 | Bediener |
| 5 | Antriebsstrang | 38 | Georeferenzierte Daten |
| 6 | Bodeneingriffsmittel | 39 | Umweltparameter |
| 7 | Lenksystem | | |
| 8 | Zapfwelle | D | Daten |
| 9 | Hydrauliksystem | P | Parameter |
| 10 | Pick-up | S | Steuersignale |
| 11 | Rotor | EG | Erntegut |
| 12 | Schneidmesser | KD | Konfigurationsdatensatz |
| 13 | Raffer | ZG | Zielgröße |
| 14 | Presskammer | | |
| 15 | Bindeeinrichtung | | |
| 16 | Ballenablageeinrichtung | | |
| 17 | Hydrauliksystem | | |
| 18 | Deichsel | | |
| 19 | Erntegutballen | | |
| 20 | Assistenzsystem | | |
| 21 | Steuerungsvorrichtung | | |
| 22 | Maschinenanordnung | | |
| 23 | Steuerungsvorrichtung | | |
| 24 | Farmmanagementsystem | | |
| 25 | Recheneinheit | | |
| 26 | Speichereinheit | | |
| 27 | Anzeigeeinrichtung | | |
| 28 | Eingabe-Ausgabeeinheit | | |
| 29 | Schwad | | |
| 30 | Futterernteprozess | | |
| 31 | Arbeitsaufgabe | | |
| 32 | Mähen | | |
| 33 | Wenden/Zetten | | |

## Patentansprüche

1. Assistenzsystem (20), welches dazu eingerichtet ist, zumindest eine landwirtschaftliche Maschinenanordnung (22) bei der Planung und Durchführung zumindest einer auf einem Feld (F) auszuführenden landwirtschaftlichen Arbeitsaufgabe (31) zur Bildung von in Schwaden (29) abgelegtem Erntegut (EG) zu unterstützen, indem das Assistenzsystem (20) zumindest einen Konfigurationsdatensatz (KD) zur Durchführung der zumindest einen landwirtschaftlichen Arbeitsaufgabe (31) durch die zumindest eine Maschinenanordnung (22) generiert, **dadurch gekennzeichnet, dass** das Assistenzsystem (20) dazu eingerichtet ist, die Generierung des zumindest einen Konfigurationsdatensatzes (KD) vorausplanend in Abhängigkeit von dem Assistenzsystem (20) zur Verarbeitung bereitgestellten Daten (D) und/oder Parametern (P) einer das Feld (F) nachfolgend bearbeitenden, an eine landwirtschaftliche Zugmaschine (1) adaptierten Ballenpresse (2), eines mit der Ballenpresse (2) durchzuführenden Ballenpressvorgangs (35) und/oder eines zu pressenden Erntegutballens (19) durchzuführen.

2. Assistenzsystem (20) nach Anspruch 1, **dadurch gekennzeichnet, dass** die der vorausplanenden Generierung des zumindest einen Konfigurationsdatensatzes (KD) vorgegebenen Daten (D) und/oder Parameter (P) der Ballenpresse (2) und/oder des durchzuführenden Ballenpressvorganges (35) eine mittels eines Antriebsaggregats (4) und/oder Antriebsstrangs (5) der Zugmaschine (1) einstellbare Fahrgeschwindigkeit, ein mittels eines Lenksystems (7) der Zugmaschine (1) einstellbarer Lenkwinkel, eine Ausrichtung der Ballenpresse (2) relativ zur Zugmaschine (1), eine Drehzahl einer Zapfwelle (8) der Zugmaschine (1), ein mittels eines Hydrauliksystems (9) der Zugmaschine (1) bereitzustellender hydraulischer Druck, ein Reifendruck zumindest eines Bodeneingriffsmittels (6) der Zugmaschine (1), ein Drehmoment und/oder eine Drehgeschwindigkeit einer Pick-up (10) der Ballenpresse (2), ein Drehmoment und/oder eine Drehgeschwindigkeit eines Rotors (11) der Ballenpresse (2), eine Aktivierung oder Deaktivierung von Schneidmessern (12) der Ballenpresse (2) zur Einstellung einer Schnittlänge des Erntegutes (EG), eine Drehzahl und/oder Anzahl von Hüben eines Raffers (13) der Ballenpresse (2), ein in einer Presskammer (14) der Ballenpresse (2) aufzubringender Pressdruck, eine Aktivierung oder Deaktivierung einer Bindeeinrichtung (15) der landwirtschaftlichen Ballenpresse (2), eine Arbeitsbreite der Pick-up (10) und/oder eine Ablage des mittels der Ballenpresse (2) geformten Erntegutballens (19) umfassen.

3. Assistenzsystem (20) nach Anspruch 1 oder 2, **dadurch gekennzeichnet, dass** die der vorausplanenden Generierung des zumindest einen Konfigurationsdatensatzes (KD) vorgegebenen Daten (D) und/oder Parameter (P) des zu pressenden Erntegutballens (19) aus der Gruppe Ballendichte, Trockengrad des zu pressenden Erntegutes (EG), Formstabilität, Feuchtigkeitsgehalt, Trockensubstanzgehalt, Rohfaserzusammensetzung, Rohascheanteil, Zuckergehalt, Rohproteingehalt und/oder Rohfettgehalt sind.

4. Assistenzsystem (20) nach einem der vorangehenden Ansprüche, **dadurch gekennzeichnet, dass** die der vorausplanenden Generierung des zumindest einen Konfigurationsdatensatzes (KD) vorgegebenen Daten (D) und/oder Parameter (P) zumindest eine Zielgröße und/oder eine Strategievorgabe sind.

5. Assistenzsystem (20) nach einem der vorangehenden Ansprüche, **dadurch gekennzeichnet, dass** die der vorausplanenden Generierung des zumindest einen Konfigurationsdatensatzes (KD) vorgegebenen Daten (D) und/oder Parameter (P) des mittels der Ballenpresse (2) geformten Erntegutballens (19) Zustand und/oder Energiegehalt des im Schwad (29) abgelegten Ernteguts (EG) und/oder Dimension, Masse und Lage des Schwads (29) umfassen.

6. Assistenzsystem (20) nach einem der vorangehenden Ansprüche, **dadurch gekennzeichnet, dass** das Assistenzsystem (20) dazu eingerichtet ist, der Generierung des zumindest einen Konfigurationsdatensatzes (KD) historische und/oder prognostizierte Umweltparameter (39) zugrunde zu legen, die in einer Datenquelle (36) abrufbar hinterlegt und/oder hinterlegbar sind.

7. Assistenzsystem (20) nach Anspruch 6, **dadurch gekennzeichnet, dass** die Umweltparameter (39) zumindest einen Parameter aus der Gruppe Umgebungstemperatur, Luftfeuchtigkeit, Witterungsverhältnisse, Intensität und Dauer der Sonneneinstrahlung, Verdunstung von Feuchtigkeit aus dem Boden, Bodenart, Bodenfeuchte und/oder Niederschlagsmengen umfassen.

8. Assistenzsystem (20) nach einem der vorangehenden Ansprüche, **dadurch gekennzeichnet, dass** das Assistenzsystem (20) dazu eingerichtet ist, von der zumindest einen Maschinenanordnung (22) während der Durchführung der zumindest einen auf dem Feld (F) auszuführenden landwirtschaftlichen Arbeitsaufgabe (31) und/oder von einer externen, von der Maschinenanordnung (22) unabhängigen Sensoreinrichtung (38) sensorisch erfasste, georeferenzierte Daten (38) des Erntegutes (EG), des Feldes (F) sowie der Umgebung und georeferenzierte Einstelldaten der Maschinenanordnung (22), insbesondere in Echtzeit, zu empfangen und auszuwerten.

9. Assistenzsystem (20) nach einem der vorangehenden Ansprüche, **dadurch gekennzeichnet, dass** das Assistenzsystem (20) dazu eingerichtet ist, von zumindest einer externen Datenquelle (24) bereitgestellte georeferenzierte historische Daten des zu bearbeitenden Feldes (F) zu empfangen und auszuwerten.

10. Assistenzsystem (20) nach Anspruch 8 oder 9, **dadurch gekennzeichnet, dass** das Assistenzsystem (20) dazu eingerichtet ist, eine Feldkarte mit für erzeugte Schwaden (29) spezifischen Schwaddaten mittels der empfangenen georeferenzierten Daten zu erstellen.

11. Assistenzsystem (20) nach einem der vorangehenden Ansprüche, **dadurch gekennzeichnet, dass** die zumindest eine dem Ballenpressvorgang (35) vorgelagerte Arbeitsaufgabe (31) eine Arbeitsaufgabe (31) "Mähen" (32), eine Arbeitsaufgabe (31) "Wenden" (33) und/oder eine Arbeitsaufgabe (31) "Schwaden" (34) ist, wobei eine bei der Arbeitsaufgabe (31) "Mähen" (32) verwendete Maschinenanordnung (22) ein landwirtschaftliches Gespann aus einer Zugmaschine und mindestens einem daran adaptierten Mähwerk, eine bei der Arbeitsaufgabe (31) "Wenden" (33) verwendete Maschinenanordnung (22) ein landwirtschaftliches Gespann aus einer Zugmaschine und einem daran adaptierten Wender und eine bei der Arbeitsaufgabe (31) "Schwaden" (34) verwendete Maschinenanordnung (22) ein landwirtschaftliches Gespann aus einer Zugmaschine und mindestens einem daran adaptierten Schwader ist.

12. Assistenzsystem (20) nach Anspruch 11, **dadurch gekennzeichnet, dass** das Assistenzsystem (20) dazu eingerichtet ist, den zumindest einen generierten Konfigurationsdatensatz (KD) automatisch an die die jeweilige Arbeitsaufgabe (31) ausführende Maschinenanordnung (22) zu übertragen und die Einstellung der jeweiligen Maschinenanordnung (22) entsprechend des Konfigurationsdatensatzes (KD) automatisch zu initiieren und/oder die vorzunehmenden Einstellungen mittels einer der Maschinenanordnung (22) zugeordneten Anzeigevorrichtung, insbesondere auswählbar, zu visualisieren.

13. Assistenzsystem (20) nach einem der vorangehenden Ansprüchen, **dadurch gekennzeichnet, dass** das Assistenzsystem (20) dazu eingerichtet ist, Parameter (P) der Ballenpresse (2) in Abhängigkeit vom zu erwartenden Schwad (29) anzupassen.

14. Assistenzsystem (20) nach einem der vorangehenden Ansprüche, **dadurch gekennzeichnet, dass** das Assistenzsystem (20) in ein externes Datenverarbeitungssystem, insbesondere ein Farmmanagementsystem (24), oder in eine Steuerungsvorrichtung der Maschinenanordnung (22) und/oder eine Steuerungsvorrichtung (21) der Ballenpresse (2) implementiert ist.

15. Verfahren zur Ansteuerung zumindest einer landwirtschaftlichen Maschinenanordnung auf einem Feld, wobei die zumindest eine landwirtschaftlichen Maschinenanordnung (22) bei der Planung und Durchführung zumindest einer auf dem Feld (F) auszuführenden landwirtschaftlichen Arbeitsaufgabe (31) zur Bildung von in Schwaden (29) abgelegtem Erntegut (EG) durch ein nach einem der vorangehenden Ansprüche ausgeführtes Assistenzsystem (20) unterstützt wird, indem durch das Assistenzsystem (20) zumindest ein Konfigurationsdatensatz zur Durchführung der zumindest einen landwirtschaftlichen Arbeitsaufgabe (31) durch die zumindest eine Maschinenanordnung (22) generiert wird, **dadurch gekennzeichnet, dass** die Generierung des zumindest einen Konfigurationsdatensatzes (KD) vorausplanend in Abhängigkeit von dem Assistenzsystem (20) bereitgestellten Daten (D) und/oder Parametern (P) einer das Feld nachfolgend bearbeitenden, an eine landwirtschaftliche Zugmaschine (1) adaptierten Ballenpresse (2), eines mit der Ballenpresse (2) durchzuführenden Ballenpressvorgangs (35) und/oder eines zu pressenden Erntegutballens (19) durchgeführt wird.
